# EUROPÄISCHE PATENTSCHRIFT

(11) **EP 1 285 188 B1**
(45) Veröffentlichungstag und Bekanntmachung des Hinweises auf die Patenterteilung: **17.01.2007**
(21) Anmeldenummer: 01915021.8
(22) Anmeldetag: 21.02.2001
(51) Int. Cl.: F16K 31/06, F16K 1/44

(54) **VENTIL MIT ELASTISCHEN DICHTELEMENTEN**
VALVE COMPRISING ELASTIC SEALING ELEMENTS
SOUPAPE A ELEMENTS D'ETANCHEITE ELASTIQUES

(30) Priorität: 13.05.2000 DE 10023582
(43) Veröffentlichungstag der Anmeldung: 26.02.2003
(73) Patentinhaber: ROBERT BOSCH GMBH, 70442 Stuttgart (DE)
(72) Erfinder: HESS, Juergen, 76534 Baden-Baden (DE); REEB, Georg, 77815 Buehl Eisental (DE)
(86) Internationale Anmeldenummer: PCT/DE2001/000652
(87) Internationale Veröffentlichungsnummer: WO 2001/088422

(56) Entgegenhaltungen:
- DE-A- 19 544 984
- DE-A- 19 753 575
- DE-C- 542 464
- FR-A- 2 044 401
- US-A- 5 085 241
- US-A- 5 564 458
- US-A- 5 775 363

## Beschreibung

### Stand der Technik

Die Erfindung geht aus von einem Ventil nach der Gattung des unabhängigen Anspruchs.

Derartige Ventile sind beispielsweise aus der DE 197 53 575 A1 bekannt. Bei dem in der DE 197 53 575 A1 beschriebenen Ventil handelt es sich um ein magnetisches Bypass-Ventil für eine flüssigkeitsgeregelte Heiz- bzw. Kühlanlage. Zwei auf einer Hubstange des Ventils befestigte Ventilglieder regeln den Durchfluss zwischen einem Einlasskanal und zwei Auslasskanälen, wobei einer dieser Auslasskanäle die Funktion eines Bypass-Kanals im Heiz- bzw. Kühlkreislauf übernimmt. Ein Nachteil des in der DE 197 53 575 Al beschriebenen Ventils und aller vergleichbaren Ventilen ist - konstruktionsbedingt - die recht aufwendige Montage der einzelnen Komponenten des Ventils. Dabei müssen zuerst die Dichtringe, die die Ventilsitze der Ventilkammer bilden und eine Distanzhülse, die die eigentliche Ventilkammer des Ventils begrenzt auf die Hubstange des Ventils aufgeschoben werden. Daran anschließend kann ein erstes, das Bypass-Ventilglied auf die Hubstange montiert und mit einer Sicherungsscheibe an der Hubstange abgesichert werden. Diese vormontierte Einheit aus Hubstange, Bypass-Ventilglied, Ventilsitzen und Distanzstück wird in das Ventilgehäuse geschoben, und die einzelnen Komponenten werden an ihre Position gesetzt. Danach muß eine weitere Distanzhülse zur Fixierung der Ventilkammer ins Ventilgehäuse eingebracht werden und erst dann kann das zweite Ventilglied zur Kontrolle des Nutzausgangs auf der Hubstange befestigt werden.

Die beschriebene Montage ist umständlich, aufwendig und damit teuer. Darüber hinaus ist die Befestigung der Ventilglieder an der Hubstange aufwendig durch eine Nut in der Hubstange und eine zusätzliche Sicherungsscheibe abzusichern.

### Vorteile der Erfindung

Das erfindungsgemäße Ventil mit den Merkmalen des Hauptanspruchs hat den Vorteil, dass eine schnellere und verbesserte Montage bei der Fertigung von Ventilen möglich ist. Die Montagereihenfolge wird nahezu unabhängig vom Zeitpunkt der Montage der Hubstange in das Ventilgehäuse, da die Hubstange mit den fest montierten Ventilgliedern auch noch nachträglich in die Ventilkammer eingebracht werden kann. Eine elastische Dehnbarkeit der Dichtelemente, das heißt von Ventilsitz und / oder Ventilglied sorgt dafür, dass das Ventilglied mit etwas Kraftaufwand von aussen durch den entsprechenden Ventilsitz durchführbar ist und die Dichtelemente im Ventilbetrieb dann wieder ihre Ursprungsform angenommen haben, so dass die Ventilkammer in der gewünschten Art sicher abgedichtet ist. Der notwendige Kraftaufwand zum Durchdrücken des Ventilgliedes durch einen Ventilsitz kann von aussen aufgebracht werden, es ist jedoch auch denkbar, dass dieser Kraftaufwand durch gegebenenfalls verstärkt angesteuerte Aktuatoren, die mit den Ventilgliedern zusammenwirken, aufgebracht wird.

Durch die in den weiteren Ansprüchen aufgeführten Maßnahmen sind vorteilhafte Weiterbildungen und Verbesserungen des in Anspruch 1 angegebenen Ventils möglich.

Entsprechend geformte Ventilglieder und Ventilsitze ermöglichen ein leichteres Durchdrücken der Hubstange durch die Ventilkammer. So wird durch die Ausbildung einer Schräge an der, dem zugehörigen Ventilsitz abgewandten Seite des Ventilgliedes, die relativ zur Achse der Hubstange verläuft sowie einer korrespondierenden Schräge gleicher Neigung auf der, dem Ventilglied abgewandten Seite des zugehörigen Ventilsitzes erreicht, dass das Ventilglied leichter durch den Ventilsitz hindurchführbar ist.

In der Hubstange, dem Ventilglied bzw. dem zugehörigen Ventilsitz ausgestaltete Ausnehmungen können Material des Ventilsitzes bzw. des Ventilgliedes während der Durchführung des Ventilgliedes durch den Ventilsitz aufnehmen und führen so dazu, dass das Ventilglied leichter durch den Ventilsitz hindurchführbar ist. Im Ventilbetrieb haben die Dichtelemente wiederum ihre Ursprungsform angenommen, so dass die Ventilkammer in der gewünschten Art sicher abgedichtet ist.

Ebenso kann durch eine chemische Behandlung der dichtenden Oberflächen von Ventilglied und Ventilsitz mit einem Gleitmittel erreicht werden, dass eine während der Durchführung des Ventilgliedes durch den Ventilsitz auftretende Gleitreibung minimiert wird.

Das erfindungsgemäße Ventil gestattet im speziellen eine Vormontage der Ventilkammer von Ventilen der in der DE 197 53 575 Al beschriebenen Art: Die Dichtringe, die die Ventilsitze bilden sowie die Distanzhülse, die die eigentliche Ventilkammer aufbaut, können bereits vor der Hubstange in das Ventilgehäuse eingebaut werden.

An der Hubstange selbst werden lediglich die Ventilglieder angebracht. Die Ventilglieder werden wie seither an der gewünschten Stelle auf die Hubstange zum Beispiel aufgepresst und gegebenenfalls zur Sicherung zusätzlich mit Material der Hubstange verstemmt. Die Verstemmung bietet eine einfache und zuverlässige Sicherung der Ventilglieder auf der Hubstange. Die so ausserhalb des Ventilgehäuses montierte Hubstange mit den auf ihr befestigten Ventilgliedern kann dann aufgrund der Elastizität des Ventilsitzes beziehungsweise des Ventilgliedes durch die Ventilkammer hindurch in das vormontierte Ventilgehäuse eingesetzt werden.

Die Hubstange des erfindungsgemäßen Ventils läßt sich beispielsweise auch aus einem Kunststoff herstellen. Das führt zum einen zu einer Materialkostensenkung und hat zum anderen den Vorteil, dass die Ventilglieder direkt in die Hubstange eingeschweisst werden können, was wiederum eine wesentliche Vereinfachung bei der Montage der Ventile bedeutet.

Das erfindungsgemäße Ventil ermöglicht somit eine geänderte, schnellere Montage und hat damit eine verbesserte Qualität und reduzierte Kosten bei der Produktion der Ventile zur Folge.

### Zeichnung

In der Zeichnung sind drei Ausführungsbeispiele der Erfindung dargestellt, die in der nachfolgenden Beschreibung näher erläutert werden.

Es zeigen:
Figur 1 einen Querschnitt durch ein erfindungsgemäßes Ventil nach dem ersten Ausführungsbeispiel,
Figur 2 eine vergrößerte, ausschnittsweise Darstellung der Figur 1,
Figur 3 einen Querschnitt einer alternativen, erfindungsgemäßen Ausführung eines Ventils nach dem zweiten Ausführungsbeispiel,
Figur 4 eine erfindungsgemäße Variante in einer vergrößerten, ausschnittsweisen Darstellung der Figur 3 und
Figur 5 einen Ausschnitt nach Figur 2 während der Montage des Ventils.

### Beschreibung der Ausführungsbeispiele.

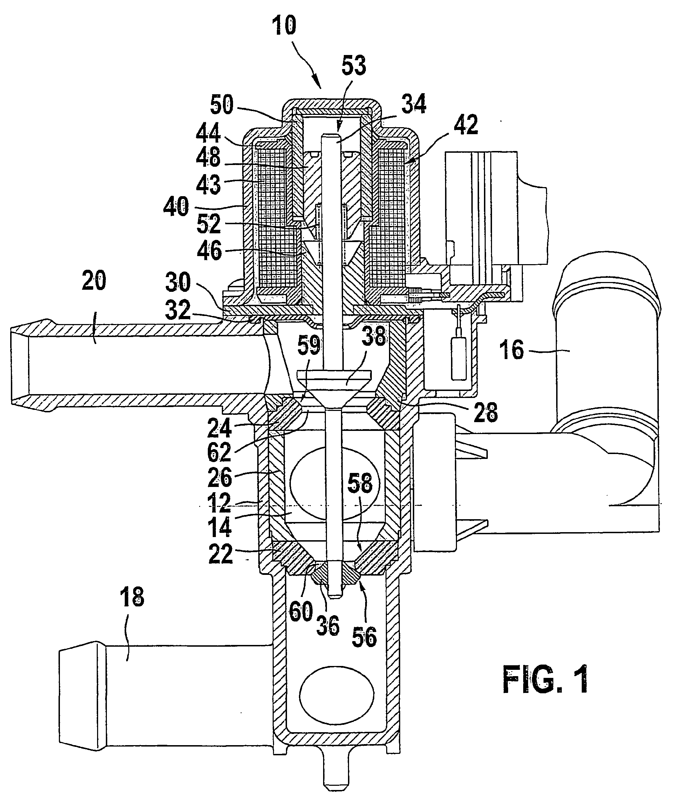

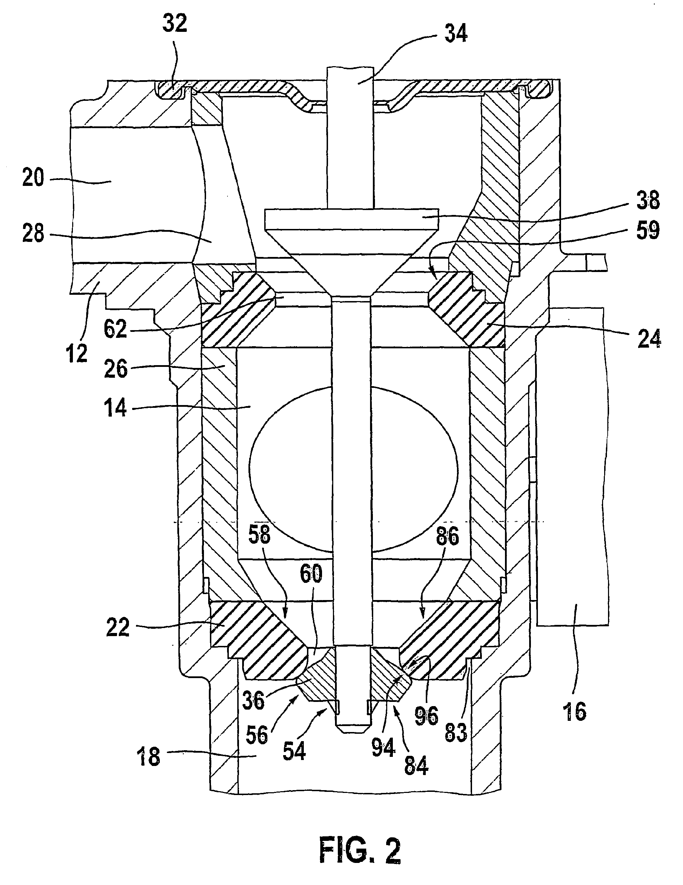

Das in Figur 1 und 2 im Querschnitt dargestellte, erfindungsgemäße Ventil 10 besitzt ein Ventilgehäuse 12, das eine Ventilkammer 14 aufweist, in die ein Einlasskanal 16, ein erster Auslasskanal 18 und ein zweiter Auslasskanal 20 führt. Die Ventilkammer 14 ist in das Ventilgehäuse 12 eingesetzt und wird gebildet von einem, dem ersten Auslass 18 zugewandten Ventilsitz 22, - in Figur 1 oder 2 unten - einem dem zweiten Auslasskanal 20 zugewandten Ventilsitz 24 - in Figur 1 oder 2 oben - und einer zwischen diesen beiden Dichtelementen angeordnete Distanzhülse 26, die das eigentliche Volumen der Ventilkammer 14 begrenzt. Die Ventilkammer 14 des Ventils 10 kann somit ausgetauscht und das Ventil 10 damit speziellen Anwendungsfällen leichter angepasst werden. Die Ventilsitze 22 beziehungsweise 24 der Ventilkammer 14 sind in diesem Ausführungsbeispiel aus einem elastisch dehnbaren Material, beispielsweise aus so genannten NBR (Acrylnitril Butadien Kautschuk) gefertigt und haben je eine Ventilöffnung 60 beziehungsweise 62. Die Ventilkammer 14 wird durch eine weitere Distanzhülse 28 im Ventilgehäuse 12 fixiert. Dazu stützt sich die Distanzhülse 28 zum einen am oberen Ventilsitz 24 der Ventilkammer 14 und zum anderen an einer Stützwand 30 ab, die am Ventilgehäuse 12 befestigt ist. Zwischen der Stützwand 30 und der Distanzhülse 28 befindet sich eine Dichtung 32, die in das Ventilgehäuse 12 eingelegt ist. Der Auslasskanal 20, der in die Distanzhülse 28 mündet, ist über ein Ventilglied 38 und dem zugehörigen Ventilsitz 24 mit der Ventilkammer 14 verbunden.

Durch die Ventilkammer 14 führt eine Hubstange 34, die das Ventilglied 38 und an ihrem, dem ersten Auslasskanal 18 zugewandten Ende ein zweites Ventilglied 36 - in der Figur 1 oder 2 das untere Ventilglied - trägt. Das Ventilglied 36 wirkt mit dem Ventilsitz 22 der Ventilkammer 14 zusammen und steuert den ersten Auslasskanal 18. Dieser ist beispielsweise geschlossen,- wie in Figur 2 gezeigt - wenn eine Dichtfläche 94 des Ventilgliedes 36 gegen eine Dichtfläche 96 des Ventilsitzes 22 anliegt. Die Ventilglieder 36 und 38 sind in der hier beschriebenen Ausführung des erfindungsgemäßen Ventils 10 aus Kunststoff beziehungsweise aus einem anderen starren Material wie beispielsweise Messing gefertigt. Die Verwendung von Messing für die Ventilglieder 36 und 38 bringt unter anderem eine erhöhte mechanische Stabilität der Ventilglieder mit sich. Zwischen den beiden Ventilsitzen 22 und 24 mündet der Einlasskanal 16 in die Ventilkammer 14.

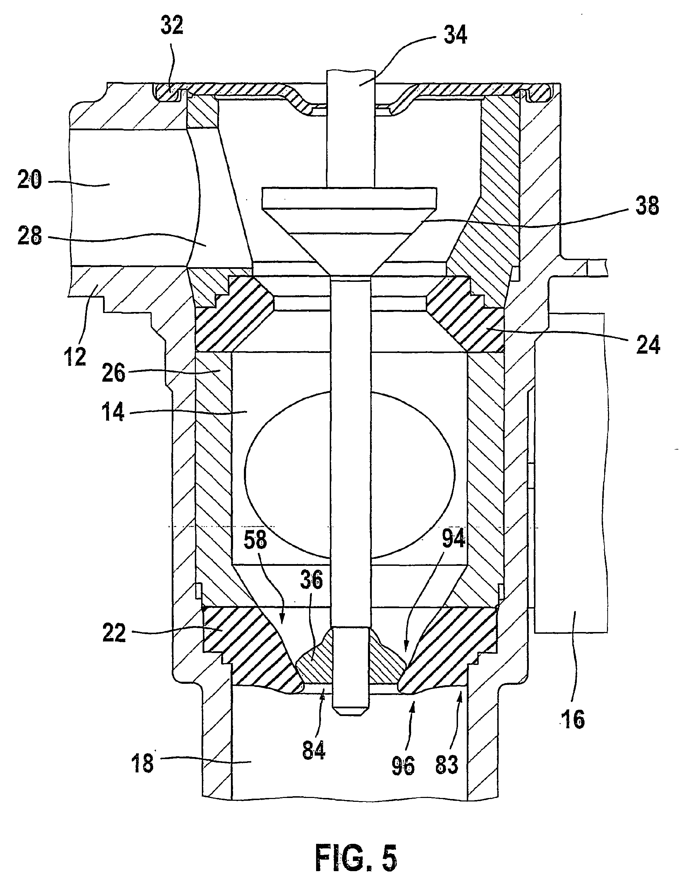

Figur 5 zeigt in einem Ausschnitt nach Figur 2 das Ventilglied 36 des Ventils 10 in einer Zwischenstellung während der Montage. Zur Montage der Ventils 10 wird die Hubstange 34 mit den auf ihr zuvor befestigten Ventilgliedern 36 und 38 durch die, in das Ventilgehäuse 12 eingesetzte Ventilkammer 14 geschoben. Dazu wird das elastische Material der Ventilsitze 22 und 24 durch das starre Ventilglied 36 gedehnt und auseinander gedrückt. Ein spaltförmiger Ausdehnungsbereich 83 zwischen dem Ventilgehäuse 12 und den Ventilsitzen 22 beziehungsweise 24 wird in diesem Ausführungsbeispiel während des Durchdrückens des Ventilgliedes 36 durch die Ventilsitze 22 und 24 geschlossen. Durch die so erweiterten Ventilöffnungen 62 und 60 kann das Ventilglied 36 hindurchgeschoben werden. Nach dem Durchdrücken des Ventilgliedes 36 durch die Ventilsitze 22 und 24 nehmen diese aufgrund ihrer Elastizität wieder ihre Ausgangsform an. Die Ventilglieder 36 beziehungsweise 38 zusammen mit den zugehörigen Ventilsitzen 22 beziehungsweise 24 können dann im Betrieb des Ventils 10 die Ventilkammer 14 in gewünschter Weise abdichten, indem zum Beispiel die Dichtfläche 96 des Ventilsitzes 22 auf der Dichtfläche 94 des Ventilgliedes 36 zu liegen kommt und den ersten Auslasskanal 18 verschließt.

Das Ventilglied 36 ist in der erfindungsgemäßen Ausführung des Ventils gegen die Hubstange 34 verstemmt, indem Material 54 der Hubstange 34 gegen das Ventilglied 36 gedrückt ist. Das Ventilglied 36 besitzt - wie im vergrößerten Ausschnitt in der Figur 2 zu erkennen ist - auf der, dem Ventilsitz 22 abgekehrten Seite seines Umfanges eine Schräge 56, die zu einer Schrägen 58 auf der, dem Ventilglied 36 abgekehrten Seite des Ventilsitzes 22 und zu einer Schrägen 59 auf der, dem Ventilglied 36 abgekehrten Seite des Ventilsitzes 24 korrespondiert. Die Schrägen 56, 58 und 59 haben in etwa die gleiche Neigung und gestatten es, dass die Hubstange 34 mit den befestigten Ventilgliedern 36 und 38 bei der Montage leichter durch die Ventilkammer 14 zu führen ist. Geführt von den Schrägen 56, 58 und 59 wird das elastische Material der Ventilsitze 22 und 24 gedehnt und damit auseinander gedrückt, so dass das Ventilglied 36 durch die erweiterten Ventilöffnungen 60 und 62 gedrückt werden kann. Um eine während des Durchdrückens des Ventilgliedes 36 durch die Ventilsitze 22 und 24 auftretende Gleitreibung zu minimieren ist die Oberfläche 84 des Ventilgliedes 36 und die Oberfläche 86 des Ventilsitzes 22 mit einem Gleitmittel versehen.

In dem in Figur 1 und Figur 2 dargestellten Ausführungsbeispiel ist die Ventilöffnung 62 des Ventilsitzes 24 so groß dimensioniert, dass das Ventilglied 36 ohne Kraftaufwendung durch diese Öffnung hindurchgeführt werden kann. Eine solche Konfiguration kann aber nicht immer realisiert werden, so dass in anderen Ausführungen des erfindungsgemäßen Ventils 10 das Ventilglied 36 auch durch den Ventilsitz 24 mit Kraftaufwand gedrückt wird.

Das obere Ende der Hubstange 34 ist durch die Dichtung 32, die an der Hubstange 34 anliegt und die Stützwand 30 hindurch aus dem Ventilgehäuse 12 herausgeführt und mündet in ein Spulengehäuse 40.

Im Spulengehäuse 40 befindet sich eine elektromagnetische Spule 42 mit Wicklungen 43 auf einem Spulenträger 44 sowie ein Magnetkern 46. Das in das Spulengehäuse geführte Ende der Hubstange 34 trägt einen Anker 48, der fest mit der Hubstange 34 verbunden und zusammen mit dieser in axialer Richtung in einer Ankerführung 50 im Innern der Spule 42 bewegbar ist. Am Anker 48 sind Ventilfedern 52 angebracht, die gegen den Magnetkern 46 der Spule 42 wirken. Der Anker 48 und die darin fixierte Hubstange 34 sind von den Wicklungen 43 der Spule 42 umgeben. Die elektromagnetische Spule 42 bildet in diesem Ausführungsbeispiel des erfindungsgemäßen Ventils in Verbindung mit einem durch die Wicklungen 43 der Spule 42 fließenden elektrischen Strom und dem an der Hubstange 34 befestigten Anker einen Aktuator 53, der die Hubstange 34 des Ventils 10 bewegt. Je nach Stromfluss durch die Spule 42 nimmt der Anker 48 in der Ankerführung 50, und damit die am Anker befestigte Hubstange 34 mit den Ventilgliedern 36 und 38 unterschiedliche Schaltpositionen in dem Ventil 10 ein.

Das ankerseitige Ende der Hubstange 34 und die, dieses Ende umgebende Spule 42 sind durch das Spulengehäuse 40 nach aussen gesichert. Das Spulengehäuse 40 ist über die Stützwand 30 am Ventilgehäuse 12 befestigt.

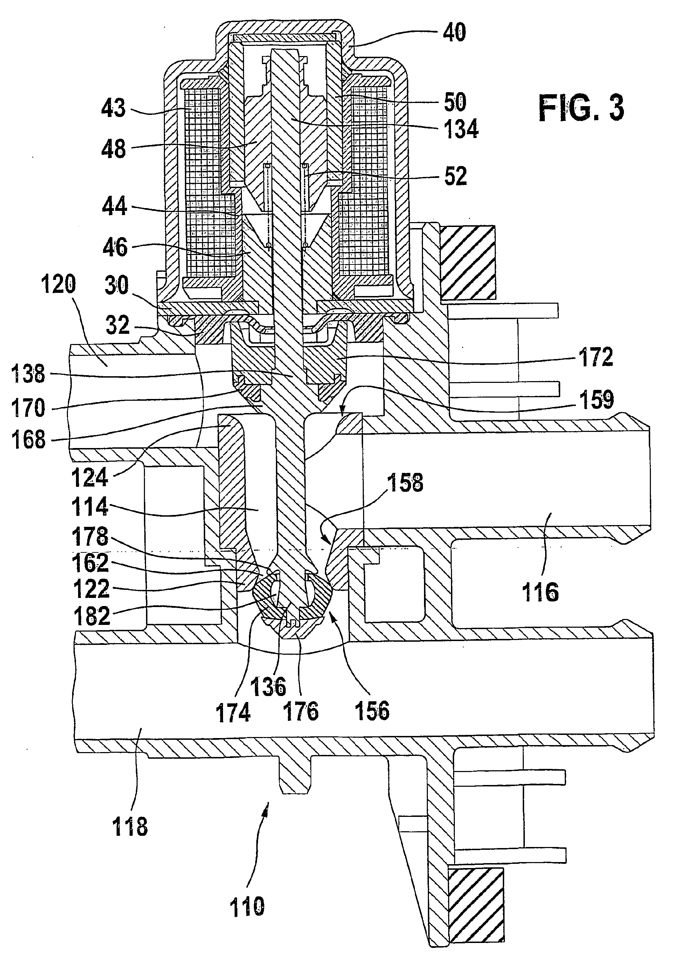

Figur 3 zeigt eine alternative Ausführungsform des erfindungsgemäßen Ventils im Querschnitt.

Bei dem im wesentlichen funktionsgleichen Ventil 110 handelt es sich ebenfalls um ein Magnetventil mit einem Einlasskanal 116, einem ersten Auslasskanal 118 und einem zweiten Auslasskanal 120, die über eine Ventilkammer 114 im Ventilgehäuse 112 verbunden sind. Im Gegensatz zu der in Figur 1 und 2 dargestellten, möglichen Ausführungsform des erfindungsgemäßen Ventils 10 sind in diesem Beispiel die Wände 188 der Ventilkammer 114 einschließlich der Ventilsitze 122 und 124 einstückig aus einem starren Material - hier Kunststoff - hergestellt.

Eine in diesem Ausführungsbeispiel ebenfalls aus Kunststoff bestehende Hubstange 134 weist ausserhalb der Ventilkammer 114 im Bereich des Auslasskanals 120 eine tellerförmige Aufweitung 168 auf, die einen elastischen Dichtring 170 trägt. Der Dichtring 170 ist zwischen der tellerförmigen Aufweitung 168 der Hubstange 134 und einem Distanzstück 172, das ebenfalls an der Hubstange 134 befestigt ist, eingeklemmt. Die tellerförmige Aufweitung 168, der Dichtring 170 und das Distanzstück 172 bilden das Ventilglied 138 des zweiten Auslasskanals 120 in dieser erfindungsgemäßen Ausführung des Ventils 110.

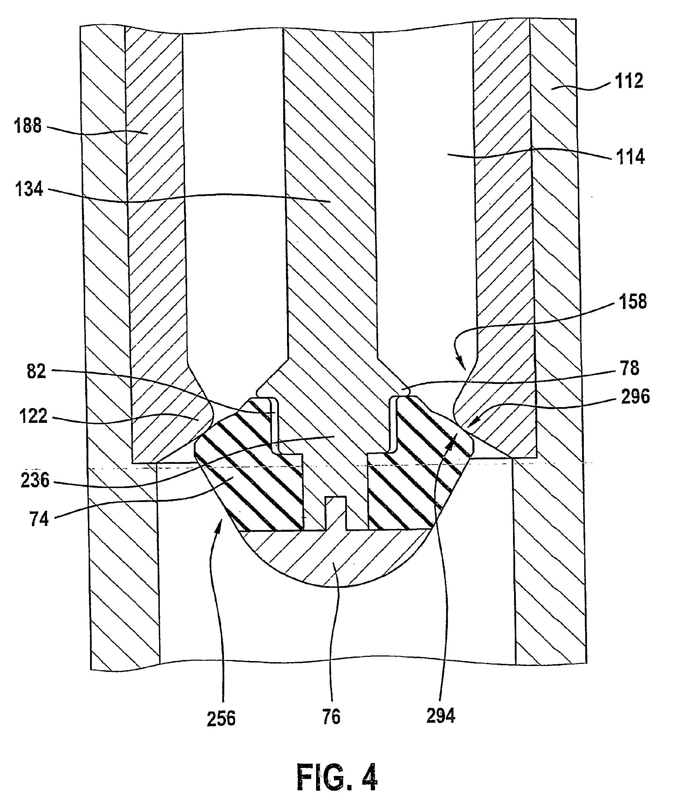

Das dem ersten Auslasskanal 118 zugewandte Ende der Hubstange 134 trägt ein Dichtglied 174, das aus einem elastischen Material gefertigt sein kann, in diesem Ausführungsbeispiel ist es so genanntes FKM (Fluorkohlenstoff-Kautschuk). Aber auch die Verwendung eines starren Kunststoffmaterials ist möglich. Das Dichtglied 174 ist über ein Kopfstück 176 federnd mit der Hubstange 134 verbunden. Dazu ist das Dichtglied 174 an einem Ende - in Figur 4: dem unteren Ende - fest mit dem Kopfstück 176 der Hubstange 134 verbunden, nicht jedoch mit der Hubstange 134 selbst. Das um die Hubstange umgreifende Dichtglied 174 ist in radialer Richtung zur Hubstange 134 beweglich und wird in dieser Richtung von einem um die Hubstange 134 herum verlaufenden Kragen 178 gesichert. Das Dichtglied 174, der umlaufende Kragen 178 und das Kopfstück 176 bilden in diesem Ausführungsbeispiel das Ventilglied 136.

Das Ventilglied 136 weist auf seiner, der Ventilkammer 114 abgewandten Seite ebenfalls eine Schräge 156 relativ zur Achse der Hubstange 134 auf, die zu einer Schrägen 158 des Ventilsitzes 122 auf der, dem Ventilglied 136 abgekehrten Seite und zu einer Schrägen 159 auf der, der Ventilkammer 114 abgekehrten Seite des Ventilsitzes 124 korrespondiert. Die Schrägen 156, 158 und 159 haben in etwa die gleiche Neigung. Der Ventilsitz 122 wird in diesem Ausführungsbeispiel gebildet durch eine Verengung des Durchmessers der Ventilkammer 114 an der, dem ersten Auslasskanal 118 zugewandten Seite der Ventilkammer 114.

Bei der Montage des Ventils 110 wird die Hubstange 134 mit den montierten Ventilgliedern 136 und 138 durch die starren Ventilsitze 122 und 124 der Ventilkammer 114 geschoben. Die Form des Dichtgliedes 174 ist so gestaltet, dass es federnd zusammengedrückt werden kann bis es an der Hubstange 134 anliegt und so seine radiale Ausdehnung reduziert hat. Dabei wird das Dichtglied 174 - geführt von den korrespondierenden Schrägen 156, 158 und 159 - in die Ausnehmung 182 zwischen dem Kopfstück 176 und dem umlaufenden Kragen 178 der Hubstange 134 gedrückt. Ein Gleitmittel auf den korrespondierenden Schrägen 156, 158 und 159 erleichtert auch hier das Durchdrücken des Ventilgliedes 136 durch die im Ausführungsbeispiel starren Ventilsitze 122 und 124. Nach dem Durchdrücken des Ventilglieds 136 spreizt sich das Dichtglied 174 wieder von der Hubstange 134 ab und dichtet zusammen mit dem Ventilsitz 122 die auslassseitige Öffnung 162 der Ventilkammer 114 ab. In diesem Ausführungsbeispiel des erfindungsgemäßen Ventils 110 wird die notwendige Elastizität der Dichtelemente also im wesentlichen durch die elastische Form des Ventilgliedes 136 bestimmt.

Eine weitere Variante des erfindungsgemäßen Ventils 110 ist ausschnittweise in Figur 4 dargestellt. Gezeigt ist ein Teil des Ventilgehäuses 112 mit der Ventilkammer 114 und dem Ventilsitz 122. Der Ventilsitz 122 besitzt wiederum eine Schräge 158 relativ zur Achse der Hubstange an seiner, einem Ventilglied 236 abgewandten Seite, die zu einer Schrägen 255 am Ventilglied 236 auf der, dem Ventilsitz 122 abgewandten Seite korrespondiert. Die Hubstange 134 trägt in diesem Ausführungsbeispiel ein Dichtglied 74 und an seinem, dem Dichtglied 74 zugewandten Ende ein Kopfstück 76. Das Dichtglied 74 ist an seinem einen Ende - dem unteren Ende in der Figur 4 - an der Hubstange 134 und dem Kopfstück 76 derart befestigt, dass das Dichtglied 74 federnd zusammengedrückt werden kann und sich, geführt von einem auf der Hubstange 134 verlaufenden Kragen 78 an die Hubstange 134 anschmiegt. Das Dichtglied 74, der umlaufende Kragen 78 und das Kopfstück 76 bilden in diesem Ausführungsbeispiel das Ventilglied 236.

Bei der Montage dieser Variante des Ventils 110 wird die Hubstange 134 wiederum mit den bereits vormontierten Ventilgliedern 236 und 138 - letzteres ist in Figur 4 nicht zu sehen - durch die Ventilsitze 122 und 124 der Ventilkammer 114 geschoben. Die Form und das Material des Dichtgliedes 74 sind so gewählt, dass das Dichtglied 74 beim Durchdrücken des Ventilgliedes 236 durch die in diesem Ausführungsbeispiel starren Ventilsitze 122 und 124 elastisch zusammengedrückt wird und sich zusätzlich federnd an die Hubstange 134 anlegt. Dabei wird das Dichtglied 74, geführt von den korrespondierenden Schrägen 256, 158 und 159 in die Ausnehmung 82 zwischen dem Kopfstück 76 und dem umlaufenden Kragen 78 des Ventilgliedes 236 gedrückt. Ein Gleitmittel auf den korrespondierenden Schrägen 256, 158 und 159 erleichtert auch hier das Durchdrücken des Ventilgliedes 236 durch die starren Ventilsitze 122 und 124. Nach dem Durchdrücken nimmt das Dichtglied 74 im Ventilglied 236 seine ursprüngliche Form und Lage wieder ein und kann mit seiner Dichtfläche 294 gegen die Dichtfläche 296 des Ventilsitzes 122 gezogen werden. In diesem Ausführungsbeispiel des erfindungsgemäßen Ventils 110 wird die notwendige Elastizität der Dichtelemente also sowohl durch die Form als auch durch das Material des Ventilgliedes 236 bestimmt.

Die Erfindung ist nicht auf die beschriebenen Ausführungsbeispiele eines elektromagnetischen Ventils mit zwei Ventilgliedern beschränkt.

Sie lässt sich ebenso vorteilhaft auch bei einem Ventil verwirklichen, das nur einen Auslasskanal besitzt und somit auch nur ein Ventilglied auf der Hubstange trägt. Ebenso ist das erfindungsgemäße Ventil nicht an die Verwendung eines elektromagnetischen Aktuators gebunden. Das Ventilgehäuse wiederum bedarf keiner speziellen Ventilkammer. Vielmehr kann diese auch durch das Ventilgehäuse selbst gebildet werden.

Das erfindungsgemäße Ventil ist nicht beschränkt auf die Verwendung, der in den Ausführungsbeispielen aufgezählten elastischen Materialien. Mögliche Materialien für die Dichtelemente sind u.a.:
Acrylnitril Butadien Kautschuk (NBR),
Hydrierter Acrylnitril Butadien Kautschuk (HNBR),
Hydrierter Acrylnitril Butadien Kautschuk unter Zugabe von PTFE zur Reduzierung der Reibung (HNBR+PTFE),
Fluorkohlenstoff-Kautschik (FKM) sowie Ethylen-Propylen-Kautschuk unter Verwendung eines Gleitmittels (EPDM+Gleitmittel).

## Patentansprüche

1. Ventil (10,110) mit einer Ventilkammer (14,114), mit davon abzweigend mindestens einem Einlass- (16,116) und einem Auslasskanal (18,118), mit einer bewegbaren Hubstange (34,134), deren eines Ende in einen Aktuator (53) mündet, sowie mit mindestens einem auf der Hubstange (34,134) befestigten Ventilglied (36,136,236), und mit mindestens einem, mit dem Ventilglied (36,136,236) zusammenwirkenden Ventilsitz (22,122), **dadurch gekennzeichnet, dass** Ventilsitz (22,122) und / oder Ventilglied (36,136,236) elastisch verformbar sind, und dass die Elastizität von Ventilsitz (22,122) und / oder Ventilglied (36,136,236) mindestens so groß ist, dass das Ventilglied (36,136,236) unter, insbesondere äusserer Krafteinwirkung durch den Ventilsitz (22,122) durchschiebbar ist und anschließend der Ventilsitz (36,136,236) und das Ventilglied (22,122) wieder in ihren Ausgangszustand zurückkehren.

2. Ventil (10,110) nach Anspruch 1, **dadurch gekennzeichnet, dass** der mindestens eine Ventilsitz (22,122) und das zugehörige mindestens eine Ventilglied (36,136,236) eine Schräge (58,158 und 56,156,256) relativ zur Achse der Hubstange (34,134) aufweisen, die zueinander korrespondieren.

3. Ventil (10,110) nach einem der Ansprüche 1 oder 2, **dadurch gekennzeichnet, dass** die Elastizität des Ventilsitzes (22,122) und / oder des Ventilgliedes (36,136,236) durch die elastischen Eigenschaften des verwendeten Materials und / oder durch die speziell gestaltete Form des Ventilsitzes (22,122) und / oder des Ventilgliedes (36,136,236) erzeugt ist.

4. Ventil (10,110) nach Anspruch 3, **dadurch gekennzeichnet, dass** sich Ausnehmungen (82,182) im Ventilsitz (22,122) und /oder im Ventilglied (36,136,236) befinden, die elastisches Material des Ventilsitzes (22,122) und / oder des Ventilgliedes (36,136,236) während der Durchführung des Ventilgliedes (36,136,236) durch den Ventilsitz (22,122) aufnehmen können.

5. Ventil (10,110) nach einem der vorhergehenden Ansprüche, **dadurch gekennzeichnet, dass** die Oberflächen (86,186 und 84,184) des Ventilsitzes (22,122) und / oder des Ventilgliedes (36,136,236) mit einem Gleitmittel behandelt sind, das eine Gleitreibung, die während der Durchführung des Ventilgliedes (36,136,236) durch den Ventilsitz (22,122) auftritt, vermindert.

6. Ventil (10,110) nach einem der Ansprüche 1 bis 5, **dadurch gekennzeichnet, dass** das mindestens eine Ventilglied (36,136,236) des Ventils (10,110) an der Hubstange (34,134) verstemmt ist.

7. Ventil (10,110) nach einem der vorherigen Ansprüche, **dadurch gekennzeichnet, dass** auf der, dem mindestens einen Ventilsitz (22,122) gegenüberliegenden Seite des mindestens einen Ventilgliedes (36,136,236), ein zweites Ventilglied (38,128) auf der Hubstange (34,134) angebracht ist.

8. Ventil (10,110) nach Anspruch 7, **dadurch gekennzeichnet, dass** das zweite Ventilglied (38,138) und der zu diesem zweiten Ventilglied (38,138) gehörige Ventilsitz (24,124) ebenfalls derartig elastisch verformbar sind, dass beide Ventilglieder (36,136 und 38,138) durch die Ventilsitze (22,122 und 24,124) mit insbesondere äusserem Kraftaufwand durchschiebbar sind.

9. Ventil (10,110) nach einem der vorherigen Ansprüche, **dadurch gekennzeichnet, dass** von der Ventilkammer (14,114) des Ventils (10,110) ein zweiter Auslasskanal (20,120) mit zugehörigem Ventilsitz (24,124) und Ventilglied (38,138) abzweigt.

10. Ventil (10,110) nach einem der Ansprüche 1 bis 9, **dadurch gekennzeichnet, dass** das Ventil einen magnetischen Aktuator (53) besitzt.

11. Ventil (10,110) nach einem der vorhergehenden Ansprüche, **dadurch gekennzeichnet, dass** die Hubstange (34,134) aus Kunststoff gefertigt ist.

12. Ventil nach Anspruch 11, **dadurch gekennzeichnet, dass** die Ventilglieder (36,136 und 38,138) in die Hubstange (34,134) direkt eingeschweisst sind.

13. Ventil nach einem der Ansprüche 1 bis 12, **dadurch gekennzeichnet, dass** die Ventilkammer (14,114) einstückig ausgefertigt ist.

14. Ventil nach einem der vorherigen Ansprüche, **dadurch gekennzeichnet, dass** das Ventil (10,110) zur wasserseitigen Steuerung des Kreislaufes einer Heiz- oder Kühlanlage gehört.

## Claims

1. Valve (10, 110) with a valve chamber (14, 114), with, branching off from this, at least one inlet duct (16, 116) and one outlet duct (18, 118), with a moveable stroke rod (34, 134), one end of which issues into an actuator (53), and with at least one valve member (36, 136, 236) fastened to the stroke rod (34, 134), and with at least one valve seat (22, 122) cooperating with the valve member (36, 136, 236), **characterized in that** the valve seat (22, 122) and/or the valve member (36, 136, 236) are elastically deformable, and **in that** the elasticity of the valve seat (22, 122) and/or valve member (36, 136, 236) is at least such that the valve member (36, 136, 236) can be pushed through the valve seat (22, 122) under, in particular, external force action and, subsequently, the valve seat (36, 136, 236) and the valve member (22, 122) return into their initial state again.

2. Valve (10, 110) according to Claim 1, **characterized in that** the at least one valve seat (22, 122) and the associated at least one valve member (36, 136, 236) have in relation to the axis of the stroke rod (34, 134) slopes (58, 158 and 56, 156, 256) which are matched with one another.

3. Valve (10, 110) according to either one of Claims 1 and 2, **characterized in that** the elastically of the valve seat (22, 122) and/or of the valve member (36, 136, 236) is generated by virtue of the elastic properties of the material used and/or by virtue of the specially configured shape of the valve seat (22, 122) and/or of the valve member (36, 136, 236).

4. Valve (10, 110) according to Claim 3, **characterized in that** recesses (82, 182) are located in the valve seat (22, 122) and/or in the valve member (36, 136, 236) and can receive elastic material of the valve seat (22, 122) and/or of the valve member (36, 136, 236) during the leading of the valve member (36, 136, 236) through the valve seat (22, 122).

5. Valve (10, 110) according to one of the preceding claims, **characterized in that** the surfaces (86, 186 and 84, 184) of the valve seat (22, 122) and/or of the valve member (36, 136, 236) are treated with a lubricant which reduces sliding friction occurring during the leading of the valve member (36, 136, 236) through the valve seat (22, 122).

6. Valve (10, 110) according to one of Claims 1 to 5, **characterized in that** the at least one valve member (36, 136, 236) of the valve (10, 110) is caulked on the stroke rod (34, 134).

7. Valve (10, 110) according to one of the preceding claims, **characterized in that** a second valve member (38, 128) is mounted on the stroke rod (34, 134) on that side of the at least one valve member (36, 136, 236) which lies opposite the at least one valve seat (22, 122).

8. Valve (10, 110) according to Claim 7, **characterized in that** the second valve member (38, 138) and the valve seat (24, 124) associated with this second valve member (38, 138) are likewise elastically deformable in such a way that both valve members (36, 136 and 38, 138) can be pushed through the valve seats (22, 122 and 24, 124) by means of, in particular, external force action.

9. Valve (10, 110) according to one of the preceding claims, **characterized in that** a second outlet duct (20, 120) with an associated valve seat (24, 124) and valve member (38, 138) branches off from the valve chamber (14, 114) of the valve (10, 110).

10. Valve (10, 110) according to one of Claims 1 to 9, **characterized in that** the valve possesses a magnetic actuator (53).

11. Valve (10, 110) according to one of the preceding claims, **characterized in that** the stroke rod (34, 134) is manufactured from plastic.

12. Valve according to Claim 11, **characterized in that** the valve members (36, 136 and 38, 138) are welded directly to the stroke rod (34, 134).

13. Valve according to one of Claims 1 to 12, **characterized in that** the valve chamber (14, 114) is manufactured in one piece.

14. Valve according to one of the preceding claims, **characterized in that** the valve (10, 110) belongs to the water-side control of the circuit of a heating or cooling system.

## Revendications

1. Soupape (10, 110) comportant une chambre (14, 114) reliée au moins à un canal d'entrée (16, 116) et un canal de sortie (18, 118), une tige d'entraînement mobile (34, 134) dont une extrémité débouche dans un actionneur (53) ainsi qu'au moins un organe de soupape (36, 136, 236) fixé sur la tige d'entraînement (34, 134) et au moins un siège de soupape (22, 122) coopérant avec l'organe de soupape (36, 136, 236),
**caractérisée en ce que**
le siège de soupape (22, 122) et/ou l'organe de soupape (36, 136, 236) sont déformables élastiquement et
l'élasticité du siège de soupape (22, 122) et/ou de l'organe de soupape (36, 136, 236) est au moins telle que l'organe de soupape (36, 136, 236) peut traverser le siège de soupape (22, 122) notamment sous l'effet de l'action d'une force extérieure et qu'ensuite le siège de soupape (36, 136, 236) et l'organe de soupape (22, 122) reprennent leur état initial.

2. Soupape (10, 110) selon la revendication 1,
**caractérisée en ce qu'**
au moins le siège de soupape (22, 122) et au moins l'organe de soupape (36, 136, 236) correspondant ont une rampe (58, 158) et (56, 156, 256) par rapport à l'axe de la tige d'entraînement (34, 134) et ces rampes se correspondent.

3. Soupape (10, 110) selon l'une des revendications 1 ou 2,
**caractérisée en ce que**
l'élasticité du siège de soupape (22, 122) et/ou de l'organe de soupape (36, 136, 236) est générée par les caractéristiques élastiques de la matière utilisée et/ou par la forme spéciale du siège de soupape (22, 122) et/ou de l'organe de soupape (36, 136, 236).

4. Soupape (10, 110) selon la revendication 3,
**caractérisée en ce que**
le siège de soupape (22, 122) et/ou l'organe de soupape (36, 136, 236) ont des cavités (82, 182) qui peuvent recevoir la matière élastique du siège de soupape (22, 122) et/ou de l'organe de soupape (36, 136, 236) pendant que l'organe de soupape (36, 136, 236) traverse le siège de soupape (22, 122).

5. Soupape (10, 110) selon l'une des revendications précédentes,
**caractérisée en ce que**
les surfaces (86, 186) et (84, 184) du siège de soupape (22, 122) et/ou de l'organe de soupape (36, 136, 236) sont traitées par un agent lubrifiant qui réduit le frottement de glissement produit pendant que l'organe de soupape (36, 136, 236) traverse le siège de soupape (22, 122).

6. Soupape (10, 110) selon l'une des revendications 1 à 5,
**caractérisée en ce qu'**
au moins un organe (36, 136, 236) de la soupape (10, 110) est serti sur la tige d'entraînement (34, 134).

7. Soupape (10, 110) selon l'une des revendications précédentes,
**caractérisée en ce que**
sur le côté d'au moins un organe de soupape (36, 136, 236) en regard d'au moins un siège de soupape (22, 122) il est prévu un second organe de soupape (38, 138) sur la tige d'entraînement (34, 134).

8. Soupape (10, 110) selon la revendication 7,
**caractérisée en ce que**
le second organe de soupape (38, 138) et le siège de soupape (24, 124) correspondant à ce second organe de soupape (38, 138) sont également déformables élastiquement de façon que les deux organes de soupape (36, 136) et (38, 138) puissent traverser les sièges de soupape (22, 122) et (24, 124) notamment sous l'action d'une force extérieure.

9. Soupape (10, 110) selon l'une des revendications précédentes,
**caractérisée en ce qu'**
un second canal de sortie (20, 120) avec un siège de soupape (24, 124) correspondant et un organe de soupape (38, 138) est issu de la chambre (14, 114) de la soupape (10, 110).

10. Soupape (10, 110) selon l'une des revendications 1 à 9,
**caractérisée en ce que**
la soupape comporte un actionneur magnétique (53).

11. Soupape (10, 110) selon l'une des revendications précédentes,
**caractérisée en ce que**
la tige d'entraînement (34, 134) est fabriquée en matière plastique.

12. Soupape selon la revendication 11,
**caractérisée en ce que**
les organes de soupape (36, 136) et (38, 138) sont directement soudés sur la tige d'entraînement (34, 134).

13. Soupape selon l'une des revendications 1 à 12,
**caractérisée en ce que**
l'organe de soupape (14, 114) est fabriqué en une seule pièce.

14. Soupape selon l'une des revendications précédentes,
**caractérisée en ce que**
la soupape (10, 110) fait partie d'une commande côté eau du circuit d'une installation de chauffage ou de refroidissement.
